# FASCICULE DE BREVET EUROPEEN

(11) **EP 0 762 026 B1**
(45) Date de publication et mention de la délivrance du brevet: **18.07.2001**
(21) Numéro de dépôt: 96810561.9
(22) Date de dépôt: 23.08.1996
(51) Int. Cl.: F16K 31/06

(54) **Electrovalve à plusieurs voies**
Elektromagnetisches Magnetventil
Electromagnetic multiple way valve

(30) Priorité: 04.09.1995 CH 251895
(43) Date de publication de la demande: 12.03.1997
(73) Titulaire: PARKER LUCIFER SA, 1227 Carouge (Genève) (CH)
(72) Inventeur: Roch, Jean-François, 74800 La Roche sur Foron (FR)
(74) Mandataire: Meylan, Robert Maurice

(56) Documents cités:
- EP-A- 0 185 168
- WO-A-91/08411
- CH-A- 584 861
- DE-C- 3 941 643
- US-A- 3 469 818
- US-A- 4 817 914

## Description

La présente invention a pour objet une électrovalve à plusieurs voies comprenant un corps de valve contenant un clapet et présentant au moins un conduit d'entrée et un conduit de sortie, un électroaimant assemblé au corps de valve avec interposition d'une garniture d'étanchéité et comprenant un bobinage, un noyau fixe et un noyau mobile prenant appui, sous l'effet d'un ressort, sur le clapet, par deux pieds passant de chaque côté dudit conduit de sortie, ce conduit de sortie communiquant avec le côté du clapet en regard du noyau mobile.

Une telle électrovalve a été réalisée jusqu'ici par empilage d'au moins trois éléments, à savoir le corps de valve, un élément retenant le clapet et l'électroaimant. L'empilage est réalisé en partie par dessous et par dessus, dans le cas de l'électrovalve décrite dans le brevet CH 584 861, ou, dans le cas de l'électrovalve UNIVER (marque déposée), par l'empilage par dessus de la partie retenant le clapet et de l'électroaimant. Dans les deux cas l'étanchéité de la valve doit être assurée par des garnitures, en particulier par des joints O-ring qui sont comprimés entre les éléments empilés. Compte tenu des tolérances dans les sections des garnitures d'étanchéité, en particulier des O-ring, il est difficile de maîtriser le déplacement axial des éléments empilés lors de la compression des garnitures, de sorte que l'on ne peut éviter totalement des variations de la course du clapet, course qui doit être souvent très faible, de telle sorte que des variations, même minimes, peuvent avoir une influence considérable sur le travail de la valve, en particulier son débit.

La présente invention a pour but de réaliser une électrovalve dont la course du clapet ne dépend plus du tout des garnitures d'étanchéité.

A cet effet, l'électrovalve selon l'invention est caractérisée en ce que le corps de valve présente essentiellement deux évidemments de forme générale cylindrique dont les axes sont sécants et perpendiculaires entre eux et se traversant mutuellement, un premier de ces évidemments étant coaxial aux noyaux de l'électroaimant et contenant le clapet dont le siège est formé au fond dudit évidemment, le second évidemment contenant un corps de forme générale cylindrique de même diamètre(s) que ledit évidemment, s'étendant entre le clapet et le noyau mobile et dans lequel est ménagé une partie du conduit de sortie de la valve, ce corps cylindrique étant muni d'au moins deux garnitures d'étanchéité situées de part et d'autre du premier évidemment de manière à assurer l'étanchéité interne et externe de la valve.

La déformation des garnitures d'étanchéité n'a ainsi aucune influence sur la course du clapet.

On constate en outre que l'on fait l'économie d'une garniture d'étanchéité et que l'on diminue ainsi les risques de fuite.

Le corps cylindrique muni des garnitures peut être avantageusement utilisé pour réaliser une commande manuelle de la valve. A cet effet, ce corps cylindrique est réalisé en deux parties, l'une de ces parties étant montée rotativement dans le second évidemment et présentant une extrémité excentrique agissant sur le noyau mobile.

Le dessin annexé représente, à titre d'exemple, une forme d'exécution de l'invention.

La figure 1 est une vue en coupe selon I-I de la figure 2, selon l'axe de l'électroaimant et du clapet, représentant l'électrovalve en position fermée, de repos.

La figure 2 est une vue en coupe selon II-II de la figure 1, également selon l'axe de l'électroaimant.

La figure 3 est une vue partielle en coupe selon III-III de la figure 1, montrant la commande manuelle.

La figure 4 est une vue en coupe selon IV-IV de la figure 1 de cette même commande manuelle.

La figure 5 est une vue en coupe selon le même plan que la figure 3, mais montrant la commande manuelle en position d'actionnement du noyau mobile.

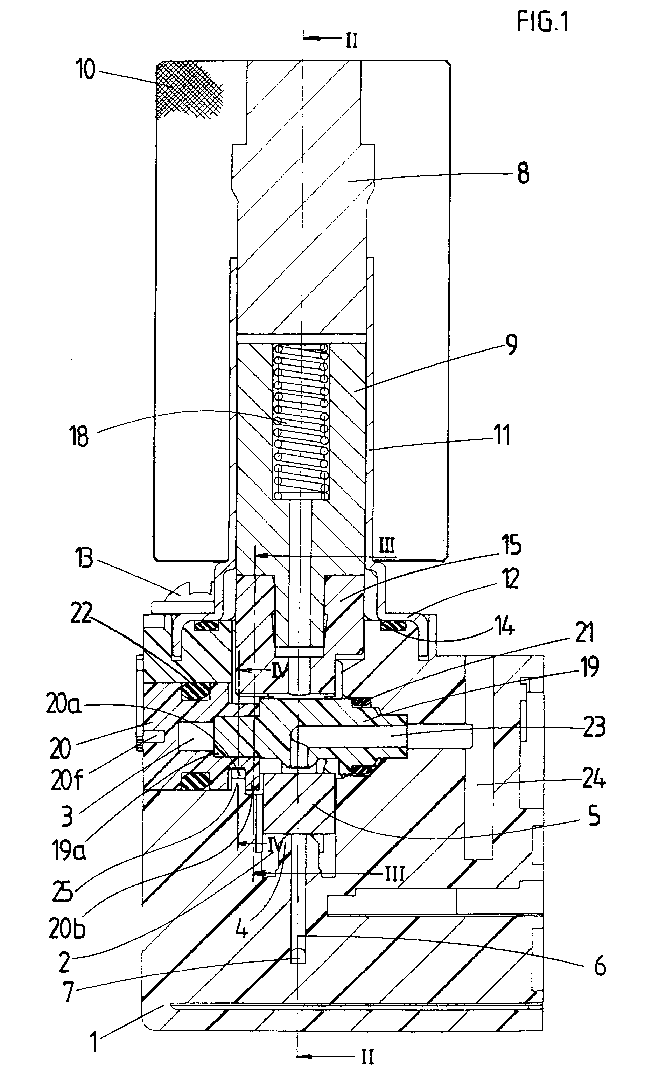

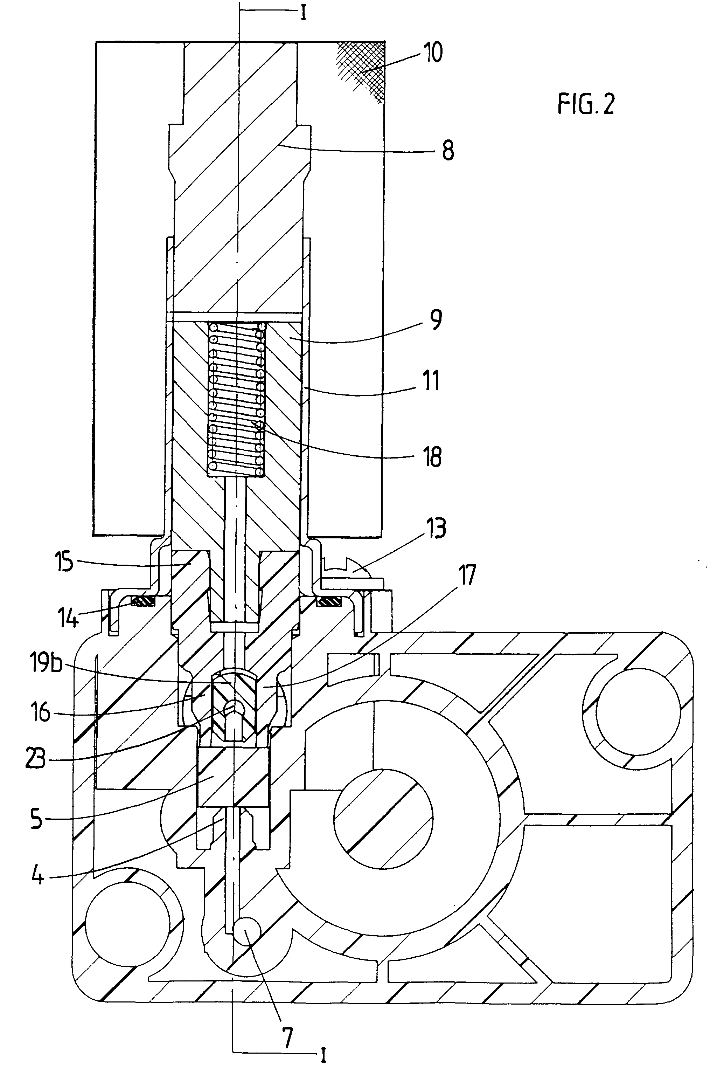

La valve représentée aux figures 1 et 2 comprend un corps de valve 1 de forme générale parallépipédique rectangulaire présente essentiellement un premier évidemment 2 de forme générale cylindrique, vertical dans le dessin, et un second évidement 3, également de forme générale cylindrique et dont l'axe, horizontal dans le dessin, est perpendiculaire et sécant à l'axe du premier évidemment 2.

Le fond de l'évidemment 2 présente une partie saillante 4 formant siège de clapet pour un clapet 5 et il est percé d'un conduit central 6 communiquant avec une entrée 7 de la valve. Sur le corps de valve et monté un électroaimant constitué d'un noyau fixe 8, d'un noyau mobile 9 et d'une bobine 10. Le noyau fixe 8 est fixé à l'extrémité d'un manchon cylindrique 11 qui porte la bobine 10 et qui est fixé au corps de valve 1 par un flasque 12 et des vis 13 avec interposition d'une garniture d'étanchéité 14. L'axe des noyaux 8 et 9 est confondu avec l'axe de l'évidemment 2 et du clapet cylindrique 5. A l'extrémité inférieure du noyau mobile 9, est fixée une pièce 15 en matière synthétique s'appuyant par deux pieds 16 et 17 sur le clapet 5. En l'absence de courant, le noyau mobile 9 est en appui sur le clapet 5 par l'intermédiaire de la pièce 15 sous l'effet d'un ressort 18 travaillant en compression entre le noyau fixe 8 et le noyau mobile 9. Le ressort 18 est logé dans un évidemment du noyau mobile.

Dans le second évidemment 3 du corps de valve 1, est monté un corps de forme générale cylindrique constitué d'une pièce fixe 19 traversant l'évidemment 2 et d'une pièce mobile 20 montée rotativement sur une portée cylindrique 19a de la pièce 19 et dans l'évidemment 3. La pièce 19 est munie d'une garniture d'étanchéité 21 en contact avec la paroi de l'évidemment 3. La pièce rotative 20 est également munie d'une garniture d'étanchéité 22. La pièce 19 présente un conduit axial 23 débouchant d'un côté au-dessus du clapet 5 et communiquant d'autre part avec un conduit de sortie 24. La pièce 19 présente, dans sa partie centrale, deux méplats parallèles pour le passage des pièces 16 et 17 du noyau mobile. Les pièces 16 et 17 passent donc de chaque côté du conduit 23 assimilable au conduit de sortie.

L'étanchéité de la valve est donc assurée, d'une part, par la garniture 14 et l'étroit contact entre le noyau mobile 8 et le manchon 11 et, d'autre part, par les garnitures 21 et 22 qui seront généralement constituées d'O-ring. On constate que l'écrasement des garnitures 21 et 22 n'a aucune influence sur la position du noyau mobile 9 relativement au noyau fixe 8, c'est-à-dire sur la course du noyau mobile, c'est-à-dire du clapet 5. Quant à la garniture 14, elle est dans tous les cas totalement écrasée par le flasque 12 et les vis 13 et elle n'a donc également aucune influence sur la position du noyau mobile.

En outre, on constate que l'étanchéité de la valve est assurée par trois garnitures seulement, la garniture 22 autorisant en outre la rotation de la pièce 20 pour la commande manuelle de la valve, comme ceci va être décrit.

La pièce 20 présente, du côté intérieur, une gorge 20a s'étendant sur une partie de son pourtour, à savoir un peu plus de 180°, gorge par laquelle la pièce 20 est fixée à baïonnette sur une nervure 25 de l'évidemment 3, nervure s'étendant sur un peu moins d'un demi-cercle. La partie 20b, en avant de la nervure 25, présente une fente d'élasticité 20c en forme d'arc de cercle laissant subsister un bras 20d susceptible de fléchir élastiquement. En arrière de la nervure 25, dans le plan de la nervure 25, la pièce 20 présente une section en forme de pêne de serrure venant en butée en 26 sur la nervure 25 pour limiter angulairement la rotation de la pièce 20. Côté externe, la pièce 20 présente une fente de vis 20f pour son entraînement en rotation.

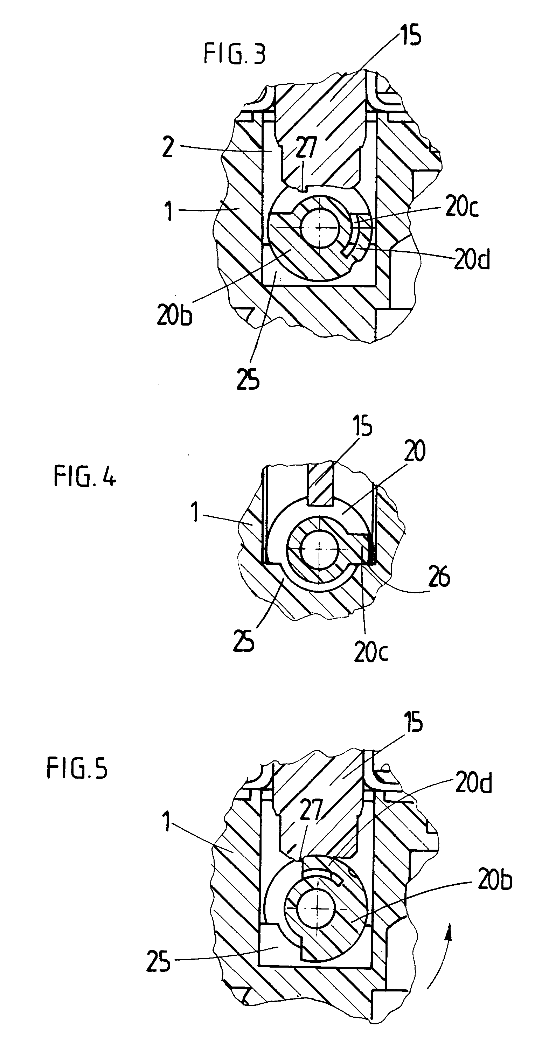

Aux figures 3 et 4, la pièce 20 est dans sa position inopérante.

Lorsque la pièce 20 est entraînée en rotation, dans le sens antihoraire dans le dessin, sa partie 20b vient repousser le noyau mobile, plus précisément son embout 15 en libérant ainsi le clapet 5, comme représenté à la figure 5. Lors de cette rotation l'extrémité du bras 20d vient buter contre un cran 27 du noyau mobile, cran qui limite ainsi la rotation de la pièce 20.

L'extrémité de la partie en forme de pêne de serrure vient en outre se placer sous l'embout 15, verrouillant ainsi le noyau mobile en position rétractée.

A l'exception des noyaux 8 et 9, du ressort 18 et du manchon 11, toutes les autres pièces sont en matière synthétique.

## Revendications

1. Electrovalve à plusieurs voies comprenant un corps de valve (1) contenant un clapet (5) et présentant au moins un conduit d'entrée (7) et un conduit de sortie (24), un électroaimant (8, 9, 10) assemblé au corps de valve avec interposition d'une garniture d'étanchéité (14) et comprenant un bobinage (10), un noyau fixe (8) et un noyau mobile (9) prenant appui, sous l'effet d'un ressort (18), sur le clapet, par deux pieds (16, 17) passant de chaque côté du conduit de sortie, ce conduit de sortie communiquant avec le côté du clapet en regard du noyau mobile, caractérisée en ce que le corps de valve (1) présente essentiellement deux évidemments (2, 3) de forme générale cylindrique dont les axes sont sécants et perpendiculaires entre eux et se traversant mutuellement, un premier (2) de ces évidemments étant coaxial aux noyaux de l'électroaimant et contenant le clapet (5) dont le siège est formé au fond dudit évidemment, le second évidemment, (3) contenant un corps (19, 20) de forme générale cylindrique de même diamètre que ledit évidemment et dans lequel est ménagé une partie (23) du conduit de sortie de la valve, ce corps cylindrique étant muni d'au moins deux garnitures d'étanchéité (21, 22) situées de part et d'autre du premier évidemment (2) de manière à assurer l'étanchéité de la valve entre le clapet et les noyaux mobiles.

2. Electrovalve selon la revendication 1, caractérisée en ce que ledit corps de forme générale cylindrique est en deux parties (19, 20) portant chacune une garniture d'étanchéité, la partie (20), accessible de l'extérieur du corps de valve, étant montée rotativement sur la partie intérieure (19) et présentant une extrémité intérieure en forme de came (20b, 20d), repoussant le noyau mobile lors de l'entraînement en rotation de ladite partie montée rotativement, pour l'ouverture manuelle du clapet.

3. Electrovalve selon la revendication 2, caractérisée en ce que la partie en forme de came (20b, 20d) présente une fente d'élasticité (20c) permettant une flexion d'une partie (20d) de la partie en forme de came lorsqu'elle est en appui contre le noyau mobile.

4. Electrovalve selon la revendication 2 ou 3, caractérisée en ce que la partie rotative (20) dudit corps cylindrique présente, en arrière de la partie en forme de came, une gorge (20a) s'étendant sur un peu plus de 180°, par laquelle cette partie rotative est retenue axialement sur une nervure (25) du corps de valve.

5. Electrovalve selon l'une des revendications 1 à 4, caractérisée en ce que l'électroaimant comprend un manchon métallique (11) enserrant le noyau fixe (8) et fixé à celui-ci, la base de ce manchon étant en forme de flasque (12) fixé par des vis sur le corps de valve avec interposition d'une garniture d'étanchéité (14).

## Patentansprüche

1. Elektromagnetisches Mehrwegeventil mit einem Ventilkörper (1), der eine Ventilklappe (5) enthält und wenigstens eine Einlassleitung (7) und eine Auslassleitung (24) aufweist, mit einem Elektromagneten (8, 9, 10), der am Ventilkörper unter Zwischenlage einer Dichtung montiert ist und eine Spule (10), einen festen Kern (8) und einen beweglichen Kern (9) aufweist, welcher sich unter der Wirkung einer Feder (18) mit zwei beiderseits der Ausgangsleitung verlaufenden Füssen (16, 17) auf der Ventilklappe abstützt, wobei die Ausgangsleitung mit der dem beweglichen Kern zugewandten Seite der Ventilklappe in Verbindung steht, dadurch gekennzeichnet, dass der Ventilkörper (1) im wesentlichen zwei allgemein zylinderförmige Ausnehmungen (2, 3) hat, deren Achsen Sekanten sind, zueinander senkrecht stehen und sich gegenseitig durchqueren, dass eine erste (2) dieser Ausnehmungen koaxial zu den Kernen des Elektromagneten liegt und die Ventilklappe (5) enthält, deren Sitz am Boden der erwähnten Ausnehmung gebildet ist, dass die zweite Ausnehmung (3) einen allgemein zylinderförmigen Körper (19, 20) enthält, der denselben Durchmesser wie die erwähnte Ausnehmung hat und welcher einen Abschnitt (23) der Ausgangsleitung des Ventils aufweist, und dass dieser zylindrische Körper mit wenigstens zwei Dichtungen (21, 22) versehen ist, die beiderseits der ersten Ausnehmung (2) liegen, derart, dass die Dichtheit des Ventils zwischen der Ventilklappe und den beweglichen Kernen gewährleistet ist.

2. Elektromagnetisches Ventil nach Anspruch 1, dadurch gekennzeichnet, dass der allgemein zylinderförmige Körper aus zwei Teilen (19, 20) besteht, von denen jedes eine Dichtung trägt, und dass das von der Aussenseite des Ventilkörpers zugängliche Teil (20) drehbar auf dem inneren Teil (19) montiert ist und ein inneres Ende in Form einer Nocke (20b, 20d) aufweist, welche den beweglichen Kern zurückstösst, wenn das erwähnte drehbar montierte Teil zum manuellen Öffnen des Ventils in Drehung versetzt wird.

3. Elektromagnetisches Ventil nach Anspruch 2, dadurch gekennzeichnet, dass das nockenförmige Teil (20b, 20d) einen Elastizitätsspalt (20c) aufweist, welcher es erlaubt, dass sich ein Abschnitt (20d) des nockenförmigen Teils biegt, wenn er sich gegen den beweglichen Kern abstützt.

4. Elektromagnetisches Ventil nach Anspruch 2 oder 3, dadurch gekennzeichnet, dass das drehbare Teil (20) des erwähnten zylindrischen Körpers hinter dem nockenförmigen Teil eine Hohlkehle (20a) aufweist, die sich über ein wenig mehr als 180° erstreckt und durch welche dieses drehbare Teil axial auf einer Rippe (25) des Ventilkörpers gehalten wird.

5. Elektromagnetisches Ventil nach einem der Ansprüche 1 bis 4, dadurch gekennzeichnet, dass der Elektromagnet eine metallische Hülse (11) aufweist, die den festen Kern (8) einspannt und an ihm befestigt ist, und dass die Basis dieser Hülse die Form eines Flanschs (12) hat, der unter Zwischenlage einer Dichtung (14) mit Schrauben auf dem Ventilkörper befestigt ist.

## Claims

1. Multi-way solenoid valve comprising a valve body (1) containing a shutter element (5) and having at least one inlet port (7) and one outlet port (24), an electromagnet (8, 9, 10) assembled with the valve body with the interposition of a seal (14) and comprising a winding (10), a stationary core (8) and a moving core (9) bearing, under the effect of a spring (18), on the shutter element via two legs (16, 17) passing one on each side of the outlet port, this outlet port communicating with the side of the shutter element facing the moving core, characterized in that the valve body (1) essentially has two recesses (2, 3) of cylindrical overall shape, the axes of which are secant and mutually perpendicular and cross one another, a first (2) of these recesses being coaxial with the cores of the electromagnet and containing the shutter element (5), the seat of which is formed at the closed end of the said recess, the second recess (3) containing a body (19, 20) of cylindrical overall shape of the same diameter as the said recess and in which a part (23) of the outlet port of the valve is formed, this cylindrical body being equipped with at least two seals (21, 22) located one on each side of the first recess (2) so as to provide the valve with sealing between the shutter element and the moving cores.

2. Solenoid valve according to Claim 1, characterized in that the said body of cylindrical overall shape is in two parts (19, 20) each carrying a seal, the part (20) accessible from the outside of the body of the valve being mounted to rotate on the interior part (19) and having a cam-shaped interior end (20b, 20d) pushing the moving core as the said part that is mounted so that it can rotate is turned to manually open the valve.

3. Solenoid valve according to Claim 2, characterized in that the cam-shaped part (20b, 20d) has an elasticity slot (20c) allowing part (20d) of the cam-shaped part to bend when it is pressed against the moving core.

4. Solenoid valve according to Claim 2 or 3, characterized in that the rotary part (20) of the said cylindrical body has, to the rear of the cam-shaped part, a groove (20a) extending over a little more than 180°, via which this rotary part is held axially on a rib (25) of the valve body.

5. Solenoid valve according to one of Claims 1 to 4, characterized in that the electromagnet comprises a metal sleeve (11) surrounding the fixed core (8) and fixed to it, the base of this sleeve being in the form of a flange (12) fixed by screws to the valve body with the insertion of a seal (14).
